**Europäisches Patentamt**

**European Patent Office**

**Office européen des brevets**

(19)

(11) Publication number: **0 122 829**
**A2**

## (12) EUROPEAN PATENT APPLICATION

(21) Application number: **84400517.3**

(22) Date of filing: **14.03.84**

(51) Int. Cl.³: **G 02 B 5/17**

(30) Priority: **17.03.83 US 476296**

(43) Date of publication of application:
**24.10.84 Bulletin 84/43**

(84) Designated Contracting States:
**BE DE FR GB IT**

(71) Applicant: **THE BENDIX CORPORATION**
**Executive Offices Bendix Center**
**Southfield Michigan 48037(US)**

(72) Inventor: **Rover, Ralph Richard, Jr.**
**Lambs Lane**
**Creskill New Jersey 07626(US)**

(74) Representative: **Brullé, Jean et al,**
**Service Brevets Bendix 44, rue François 1er**
**F-75008 Paris(FR)**

(54) **Light directing faceplate.**

(57) A directional face plate for a display device is provided in which the face plate itself is made of a fiber optic media (13). Optical images produced on an inside surface (25) of the face plate (13) are transferred and reproduced at an outside surface (16). This enables a geometic directional filter (26) to be placed directly on a surface (16) upon which an image is produced. The fiber optic filter (13) provides a certain amount of directional filtration and therefore enhances the effect of the directional filter (26), as well as permitting the geometric directional filter (26) to be placed directly on an image bearing surface (16). Further advantages include the ability to provide a flat geometric filter (26) while ignoring the effects of placing an image generating substance (14) on a curved surface (25').

FIG. 3

## LIGHT DIRECTING FACEPLATE

This invention relates to an optical filter for use on a display surface such as a cathode ray tube in order to provide optimum visibility of the display surface under a wide variety of ambient lighting conditions. In particular, the invention is useful for heads down video displays in aircraft cockpits, although it may also find utility in a number of other applications using illuminated displays under adverse lighting conditions.

Heads down displays of the type described are used to display a wide variety of aircraft navigational information in the cockpit of the craft. Often, different information is superimposed or is presented in detail which is difficult to read under varying ambient light conditions. When ambient light is low, as in night flying, it is a relatively simple task to reduce the brightness of the aircraft display. On the other hand, there are frequently ambient light conditions which require a display brightness that would be impractical either as a result of the capabilities of the display or the safety or comfort of the viewer. For example, if sunlight is creating a high glare condition, the display would not only have to overcome the glare but be bright enough for the information provided by the display to be discernible over background lighting conditions. Additionally, during the aircraft's maneuvering, lighting conditions can be expected to change rapidly. While an optical sensor can be used to sense ambient light intensity conditions, glare conditions can not always be determined by merely measuring ambient light levels.

The fixed position of the pilot-viewer enables the use of filter techniques which direct light within a narrow angle. For this reason, directional filters of various types have been placed in front of the CRT displays in order to block light from external sources which would tend to cause glare, while passing that light from the CRT which is traveling in the direction of the viewer. While there is a certain amount of optical amplitude (brightness) loss inherent in the use of any filter, the loss of brightness is compensated for by the decrease in glare conditions.

In order to increase the effectiveness of such directional filters while not unduly limiting the effective viewing angle of a display using such a filter, plural thin directional filters have been utilized. The use of multiple filters, like other techniques of increasing filtration, tend to decrease the amplitude of light passing through the filters. Thus, there becomes a practical limit in the amount of filtration that can be used in order to reduce the effects of adverse ambient lighting conditions.

Prior art directional filters had to be separated from an image-producing surface such as a phosphor coating by the physical thickness of a glass shell forming the face plate of a CRT. The separation of the directional filter from the image-producing surface placed limitations on filtration and, in the cases of certain types of filters, caused image blurring. The effects of glare, on the other hand, were not significantly reduced by the separation of the filter from the image-producing surface and filtration of ambient light was limited only by the characteristics of the filter itself, rather than being subject to the effects of filter separation from the desired image.

Fiber optic filters have been used to direct light along a fiber optic bundle in the direction of the strands of the fiber optic bundle. The effect of using a fiber optic filter is that of transferring the image along the length of the fiber optic bundle so that an image appearing at the bottom of the bundle appears to have been transferred to the top of the bundle and therefore appears on the top surface of the bundle. Despite their light guiding capabilities, fiber optic filters have only a limited directional filtration capability and a limited contrast enhancement capability.

This invention contemplates a directional filter for direct view displays in which a light image from the display is first passed through a fiber optic face plate to transfer the primary image developed by the display across the fiber optic face plate. A directional filter is mounted on the fiber optic face plate and the image from the face plate is passed directly to the directional filter. This results in a minimum loss of resolution and brightness. An anti-reflection coating may also be added to the outer surface of the directional filter, thereby further reducing glare. Light from external sources which would result in glare and loss of contrast is effectively filtered by the combination of the directional filter and the fiber optic face plate, thereby providing a low-glare, high-resolution image with a minimum of brightness loss. The directional filter may be selectively placed over the fiber optic face plate to give the operator a choice of whether he will use the directional filtration.

The use of the fiber optic face plate also permits the image to be projected onto a curved surface and then transferred by the fiber optic face plate to a flat outer surface where the fiber optic face plate meets the directional filter.

The manner of carrying out the invention is described in detail below with reference to the accompanying drawings which illustrate several embodiments and the operation thereof, in which:

Figure 1 shows a cross-sectional representation of a directional face plate according to the invention, as viewed from the side;

Figure 2 shows details of optical fibers used in the face plate of Figure 1; and

Figure 3 shows a side view of a directional face plate similar to that of Figure 1, but with the image being transferred from a curved surface to a flat viewing surface.

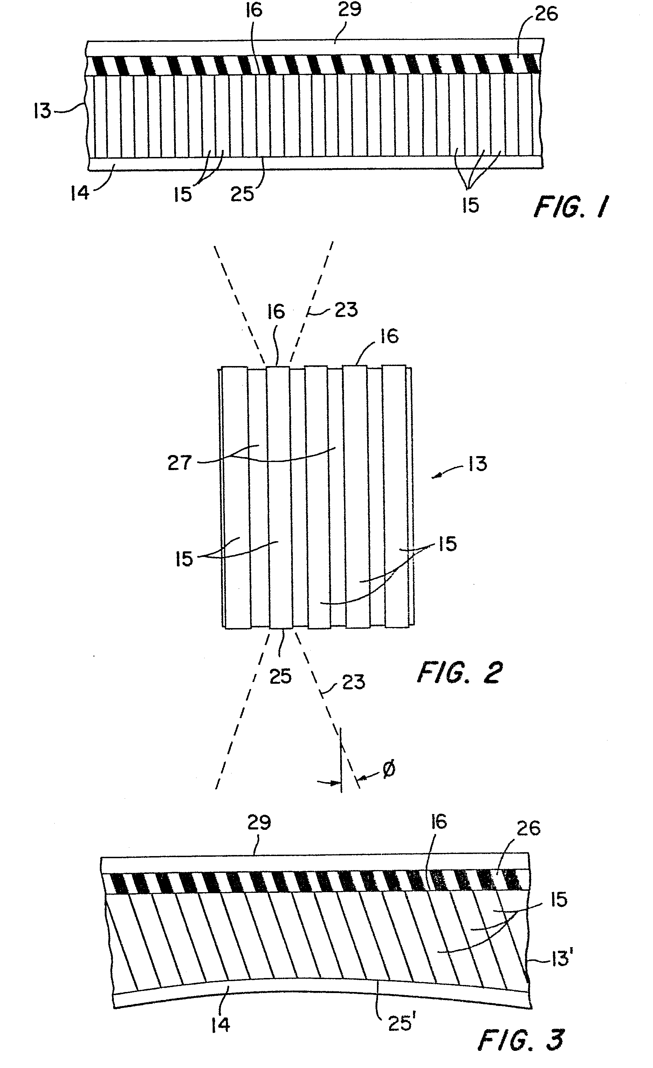

Referring to Figure 1, an enlarged cross-sectional view of the front of an image display device, such as a cathode ray tube (CRT) or a LED display, in accordance with the invention is shown. A fiber optic face plate 13 is used as the front mask for the image display device. The face plate 13 is external to, and in intimate contact with, a substrate in which is an image generating layer 14. If the image display device is a CRT, as with conventional face plates, the face plate 13 is coated with an electroluminescent coating to produce the image generating layer 14 which may be any suitable material such as a phosphor. The coating 14 illuminates or luminesces in response to electron bombardment as is the case with any CRT. For color transmission, different types of phosphors and an appropriate screen are used to display the different colors. The fiber optic face plate 13 is constructed so as to seal the CRT and is mounted to the remainder of the tube (not shown) to become an integral portion of the tube. The image generating layer 14 may include nematic (liquid crystal) substances.

The purpose of the fiber optic face plate 13 is to transfer light along optical fibers 15 from the phosphor coating 14 to an external side 16 of the face plate 13. Light from the external side 16 can, of course, be transmitted through the optical fibers 15 to the image generating layer 14.

Referring to Figures 1 and 2, the fiber optic face plate 13 transmits light along the fibers in a manner well known to those skilled in the art of fiber optics. The fibers are preferrably clad to reduce cross talk and they exhibit extramural absorption (E.M.A.) which causes light transmitted to the fibers beyond a certain angle to be absorbed. The fibers are said to have an acceptance cone of vision 23, wherein light orginating from beyond a given angle $\emptyset$ tends to be absorbed by the fibers.

In Figure 2, an example of a fiber optic filter is shown, with the optical fibers 15 extending lengthwise in the drawing. The optical filters 15 are preferrably formed as a coherent fiber optic bundle. An acceptance cone of vision, shown by dashed lines 23, has an angle $2\emptyset$, where $\emptyset$ is the angle of incidence beyond which light is no longer transmitted through the fibers 15. In practice, this angle of incidence $\emptyset$ does not form a sharply defined boundary as shown in the drawing, but instead tends to approximate an angle at which light is increasingly attenuated. Thus, if a viewer's line of vision is well within the acceptance cone of vision 23, he would be able to see an image through the fiber optic filter 13, with the image occurring at one end 25 of the filter 13 appearing to occur at the opposite end or external side 16 of the filter. If the image at end 25 occurs adjacent to fiber optic filter 13, then any portion of that image occurs at only one fiber 15, rather than more than one fiber. The effect of the filter is to transfer the image occurring at the one end 25 to the opposite end 16 so that a viewer views a real image as if the image were printed or projected onto the opposite end 16. If the image is significantly separated from the first end 25, then any portion of the image may fall upon the acceptance cone of vision 23 of more than one fiber 15. This causes the image to become diffused. Therefore, in the case shown in Figure 1 (and in Figure 3), the image is formed on the first side 25 of the face plate 13 by means of the image generating layer 14.

The original image, being formed very close to the fiber optic face plate 13, is transferred to the opposite side 16 of the face plate, as a clear real image. Without considering the effects of an additional directional filter 26, this image must be viewed within the acceptance cone of vision 23 shown in Figure 2. Outside of the acceptance cone of vision 23, the image suffers a significant loss of brightness. The fibers 15 are clad and, therefore, have a sleeve structure 27 as is conventional in the art of fiber optics. In order to enhance the clarity of the image as transferred to the fiber optic filter 13, the sleeve structure 27 has a significant extramural absorption (E.M.A.) property. This means that light leaking sideways past the fibers 15, which is not reflected at the sleeve structure 27, is absorbed by the sleeve structure 27 before the transfer to an adjacent fiber 15. If this did not take place, then light, particularly light falling outside of the acceptance cone of vision 23, would tend to be transferred across the filter 13, thereby creating a background glare and blurring of the image. The sleeve structure 27 further reduces glare because such high E.M.A. materials are usually black. This allows the sleeve structure 27 to absorb light which is directly incident on the sleeve structure 27.

Ambient light impinging on the filter 13 from a direction within the acceptance cone of vision 23 is transferred through the filter 13 to the image generating layer 14, to be reflected (in part) back to the external side 16 of the fiber optic filter 13. On the other hand, ambient light falling on the filter 13 from a direction outside of the acceptance cone of vision 23 is absorbed by the sleeve structure 27 and is not transferred to and from the image generating layer 14. This eliminates a significant source of glare in that it is anticipated that light falling sideways upon the face plate 13 would, but for the filtering characteristics, be most likely to cause glare.

Referring to Figure 3, the fibers 15 can be set at an angle in a modified face plate 13'. This causes the acceptance cone of vision 23 shown in Figure 2 to be shifted at the angle of the fibers 15. The top surface 16 is also at an angle to the fibers 15, thus shifting the acceptance cone of vision further in accordance with the index of refraction of the glass at that surface 16. Thus, images occurring at the image generating layer 14 are viewable within an acceptance cone of vision 23, which has shifted at the outer end of the filter 13' at the same angle as the fibers 15. This arrangement is advantageous where the viewer is located at a location which is not within a perpendicular line of sight of a face plate 13'. Thus, the face plate 13' does not have to be placed at an angle, even if it is not located directly in front of the viewer. Ambient light is filtered in accordance with the changed angle of the fibers 15.

As shown in Figure 1, additional filtration is provided with the directional filter 26, which cooperates with the fiber optic filter 13. It is, of course, noted that the fiber optic filter 13 is also a directional filter. Such directional filters merely block light occurring from outside of a limited direction and permit light to be transferred from within the direction, also providing an acceptance cone of vision (not separately shown). Directional filters are well known in the art of CRT displays and are traditionally used without the benefit of a fiber optic filter 13. A typical type of directional filter would include an etched screen which has been treated in order to enhance its light absorption characteristics. Such filters tend to provide a narrow acceptance cone of vision, but in order to obtain a high degree of filtration, the directional filter must be made in such a way as to create significant attenuation in the unfiltered direction.

The combination of the fiber optic filter 13 and the directional filter 26 provides a viewer with an advantage of significant light attenuated beyond a wide acceptance cone of vision, with a relatively narrow acceptance cone of vision. Furthermore, such an arrangement allows the provision of such a design with a minimum of attenuation of light in a preferred direction. In order to provide such characteristics with either the fiber optic filter 13 or the directional filter 26 alone, significant losses of light output or in clarity of the image must be expected. Thus, the present arrangement takes advantage of the properties of a fiber optic filter having a relatively wide acceptance cone of vision, but with little attenuation, as combined with the properties of directional filter 26 having a narrow acceptance cone of vision, but with significant loss in gain for the amount of filtration provided. This provides an image which is only slightly reduced in brightness and yet provides a degree of directional filtration which would tend to eliminate glare from light coming from directions other than that of the viewer. For optimum performance, the directional filter 26 and the fiber optic filter 13 should be aligned so that their acceptance cones of vision are concentric.

Analogous results are obtained by using a directional filter 26 having an acceptance cone of vision which is approximately the same as that of the fiber optic filter 13. In this instance, glare is reduced

by the cooperative effects of the two filters 13, 26, with little loss of brightness. Furthermore, the image can be viewed from a wider range of angles, despite directional filtration.

The use of the fiber optic filter 13 as a face plate for the image display device has the effect of transferring an image generated by the image generating layer 14 directly to the upper surface 16 of the fiber optic filter face plate 13. Thus, the directional filter 26 is placed directly on a real image reproduction of the image produced by the image generating layer 14, as transferred by the fiber optic filter 13. This eliminates the separation distance normally occurring between directional filters and an image produced on an image display device such as a CRT. Since attenuation is increased by separation of a directional filter from the image, the use of the fiber optic filter 13 enhances rather than decreases brightness of the image as viewed through the directional filter 26.

The real image appearing at the exterior surface of the fiber optic face plate 13 permits directional filtration to be controlled in a facile manner by simply changing the directional filter 26 as needed or desired. While add-on filters have been used before, the existence of the real image at the exterior surface 16 enhances the optical quality of a viewed image through the filters 13, 26. It is further possible to use angular filters (not shown) in place of the directional filter 26. For example, a curved coherent fiber optic bundle could be used to redirect an image from a copilot's position to a pilot's position in an aircraft having a side-by-side seating arrangement.

In order to enhance the viewability of the image, and in order to further reduce glare, an anti-glare coating 29 is provided on the outer surface of the filter arrangement. Anti-glare coatings are well known, with the anti-glare coatings of the present invention being defined by military specification MIL-C-14806A.

Referring again to Figure 3, the present filter arrangement can also be used on CRT's having curved image producing surfaces. As can be seen, a phosphor coating forming the image producing layer 14, which defines the point of conversion of electron energy to light, is curved. The characteristics of the fiber optic filter 13' are such that, as previously stated, the image on the coating 14 is transferred to the external side 16 of the filter 13'. Because the eye is unable to perceive differences resulting in the time delay caused by the light travelling (at the speed of light) over a greater distance at some parts of the filter 13', the image appears on the surface 16 as an image on a flat surface. This enhances the clarity obtained by a CRT because CRT's with concavely curved surfaces are able to achieve a slightly better resolution. Thus, the present invention, when used with the curved phosphor image producing layer 14, takes advantage of the fiber optic filter's properties of filtration as well as the ability to convert images on curved surfaces, such as curved surface 25', to an image on a flat surface such as surface 16. Thus, the viewer is able to view a CRT with curved coating surface such as surface 25' and see an image on a flat surface such as surface 16.

In the case of Figure 3, the fiber optic filter 13' facilitates the use of the directional filter 26 with a CRT having a curved lower surface 25' because the fiber optic filter 13' is able to reproduce an image created on the curved surface 25' onto a flat surface 16. This allows the directional filter 26 to be flat and at an equal distance from the image (as reproduced on the upper surface 16) at all parts of the directional filter 26.

Significantly, the use of the fiber optic filter 13 enables an image transferred to a geometric filter such as directional filter 26 to appear directly at the geometric filter 26, rather than at a distance away from the filter. In the prior art (not shown), the directional filter 26 would ordinarily be placed over a glass face plate, with an image generating layer (similar to image generating layer 14) being on the opposite side of the face plate from the filter 26. The present invention, on the other hand, while placing the image generating layer 14 remotely from the directional filter 26, transfers the image produced on the image generating layer 14 directly to the surface 16 upon which the directional filter 26 is placed. Thus, directional filtration is established at the plane of the transferred image, rather than at a separate point defined by the thickness of a face plate. Thus, the present invention enables the filtration to start at the surface upon which the image is cast rather than at some distance separated from the image. The use of fiber optics to effect such a transfer results in the above-mentioned advantages of providing additional filtration of light outside of a wide acceptance cone of vision. Furthermore, the use of the fiber optics enables us to use a directional filter such as filter 26 on a CRT, having a phosphor coating on a curved surface 25' as shown in Figure 3, without having to provide any compensation for the effectively curved surface on the image generating layer 14 forming the CRT's target surface.

It should be clear from the above description that various modifications can be made to the present invention. Possible modifications would include the use of a polarized filter (not shown) or a pair of single axis directional filters (not shown) in combination with either the fiber optic filter 13 or the fiber optic filter 13 and directional filter 26. Thus, the present invention can be used to provide a large number of variations on the preferred embodiment.

WHAT IS CLAIMED IS:

1. An image display device, characterized by:

a face plate (13) having an interior and an exterior surface (25, 16);

an image-producing substrate (14) on the interior surface (25) of the face plate;

the face plate (13) having a property of reproducing an image formed on said interior surface (25) as a real image on said exterior surface (16);

light directing media (26) in an adjacent relationship to said exterior surface (16), the light directing media modifying image transmission from said exterior surface (16).

2. Apparatus as claimed in claim 1, further characterized by:

the face plate (13) being formed of a coherent fiber optic bundle which transfers light from said interior surface (25) to said exterior surface (16) in order to reproduce the image.

3. Apparatus as claimed in claim 2, further characterized in that:

the light directing media (26) includes a directional filter providing filtration beyond that provided by the face plate (13);

said directional filter (26) having an acceptance cone of vision determined by an angular range through which the image display is to be viewed; and

the face plate (13) having an acceptance cone of vision ($\phi$) which is wider than the acceptance cone of vision of said directional filter (26).

4. Apparatus as claimed in claim 1, further characterized by:

an anti-glare coating (29) located on the light directing media (26) on a side of said light directing media (26) which is optically opposite that of said exterior surface (16) of the face plate (13).

5. A video display surface of the type having a transparent layer (13), an image-producing substrate (14) on an interior side (25) of the transparent layer (13) and which is viewed from an exterior side (16) through the transparent layer (13), further characterized by:

the transparent layer (13) being a fiber optic filter; and

a second filter layer (26), located on the exterior side (16) of the transparent layer, through which the display is viewed.

6. Apparatus as claimed in claim 1, 2 or 5 further characterized. by:

said interior side (25') having a concave curvature so that the image-producing substrate (14) exhibits a conforming curvature; and said exterior side (16) being substantially flat.

7. Apparatus as claimed in claim 5, further characterized by:

the second filter layer (26) including a directional filter providing filtration beyond that provided by the face plate (13); and

said second filter layer (26) having an acceptance cone of vision (23) determined by an angular range through which the image producing substrate (14) is to be viewed.

8. Apparatus as claimed in claim 5, further characterized by:

an anti-glare coating (29) located on the second filter layer (26) on a side of the second filter layer (26) which is optically opposite that of said exterior side (16) of the transparent layer (13).

9. Apparatus as claimed in claim 5, further characterized by:

the second filter layer (26) directing light in a non-orthogonal direction from a plane passing through said exterior side (16).

FIG. 1

FIG. 2

FIG. 3